# EUROPEAN PATENT APPLICATION

(11) **EP 2 952 835 A1**
(43) Date of publication of application: **09.12.2015**
(21) Application number: 14745487.0
(22) Date of filing: 28.01.2014
(51) Int. Cl.: F25B 41/06

(54) **ELECTRONIC EXPANSION VALVE AND CONTROL METHOD THEREOF**

(30) Priority: 04.02.2013 CN 201310043242; 04.02.2013 CN 201310044536
(71) Applicant: Hangzhou Sanhua Research Institute Co., Ltd., Hangzhou, Zhejiang 310008 (CN)
(72) Inventor: JIANG, Xiaojun, Hangzhou Zhejiang 310018 (CN); JIANG, Yibing, Hangzhou Zhejiang 310018 (CN); WANG, Hui, Hangzhou Zhejiang 310018 (CN); ZHANG, Rongrong, Hangzhou Zhejiang 310018 (CN)
(74) Representative: Wilson, Gary
(86) International application number: PCT/CN2014/071615
(87) International publication number: WO 2014/117721

(57) **Abstract**

An electronic expansion valve of an air-conditioning system, comprising a valve body (1) and an expansion valve controller; the valve body (1) comprises a refrigerant channel, a valve pin (14), and a stepping motor; the stepping motor controls the movement of the valve pin (14) to adjust the size of the opening of the refrigerant channel; the expansion valve controller outputs different control signals according to different operation conditions of the electronic expansion valve; inputting different current to the stepping motor so as to drive the stepping motor to rotate; and controlling the movement of the valve pin (14) to adjust the size of the refrigerant channel. The electronic expansion valve employs different current to drive a stepping motor according to different operation conditions, thus reducing system energy consumption, overcoming abnormal fault of the motor, and extending the service life of the electronic expansion valve.

## Description

This application claims the benefit of priorities to Chinese Patent Application No. 201310043242.4 titled "CONTROL METHOD FOR ELECTRONIC EXPANSION VALVE AND CONTROL DEVICE", filed with the Chinese State Intellectual Property Office on February 04, 2013, and Chinese Patent Application No. 201310044536.9 titled "ELECTRONIC EXPANSION VALVE AND AUTOMOTIVE AIR CONDITIONING SYSTEM", filed with the Chinese State Intellectual Property Office on February 04, 2013, the entire disclosures of which are incorporated herein by reference.

### TECHNICAL FIELD

The present application relates to the field of refrigeration systems, specifically relates to a controller for an electronic expansion valve, and further relates to an electronic expansion valve and a control method thereof.

### BACKGROUND

A refrigeration system generally includes four main components, including a compressor, a condenser, an evaporator and an expansion valve. The expansion valve is used to control the flow rate of refrigerant flowing from the condenser to the evaporator, and the superheat degree of the refrigeration system is controlled by adjusting the flow rate of the refrigerant.

The expansion valves used in the refrigeration system generally include a thermal expansion valve and an electronic expansion valve. The thermal expansion valve uses a temperature sensing bulb to sense the temperature of an outlet of the evaporator, to adjust an opening degree of the thermal expansion valve, and further to control the flow rate of the refrigerant entering the evaporator. The electronic expansion valve (EXV) generally includes a valve body and a controller for the expansion valve, and the valve body is provided with a passage for allowing the refrigerant to flow, a valve needle configured to cooperate with the passage, and a stepping motor configured to control the motion of the valve needle to adjust the opening degree of the passage of the refrigerant. Rotation of the stepping motor is controlled by the controller for the expansion valve, and the electronic expansion valve controls the opening degree of the electronic valve according to electrical signals, to control the flow rate of the refrigerant. Compared with the thermal expansion valve, the electronic expansion valve as an electrically driven component needs to consume electric energy, thus it is desirable that the power consumption of the electronic expansion valve is reduced as much as possible under the premise of meeting the using requirement of the operating condition of the refrigeration system.

In the conventional technology, a constant-voltage method or a constant-current method is generally used to drive and control the stepping motor of the electronic expansion valve. The constant-voltage method refers to driving the stepping motor with a constant voltage, to generate a current signal in a coil of the stepping motor, and the current signal is directly proportional to the constant voltage. The constant-current method refers to modulating a voltage signal with the pulse width modulation (PWM, Pulse Width Modulation) technology. During the turn-on time of the PWM, the voltage is applied on the coil of the stepping motor, which generates a continuously increasing current signal in the coil, and the turn-on time of the PWM finishes when the current signal reaches a preset value. The constant-current method includes a subdivision constant-current method, such as the four-subdivision current, the eight-subdivision current, and the sixteen-subdivision current, to generate micro-step. Compared with the common constant-current method, the subdivision constant-current control allows a waveform of the current to be more controllable.

However, no matter the electronic expansion valve is controlled by the constant-voltage method or the constant-current method in the conventional technology, for the controlled stepping motor, it is both equivalent to applying a current pulse of a certain regular pattern, namely a field current, in the coil of the stepping motor, thereby generating a moment of force to drive a rotor of the stepping motor to rotate.

For the constant-voltage method, since the stepping motor is driven by the constant voltage with a fixed value, the value of the current generated in the coil of the stepping motor is also fixed, and the value of the current is directly proportional to the fixed value of the voltage. For the constant-current method, no matter the subdivision method is employed or not, once the preset value of the current is determined, the waveform of the current applied in the coil is also determined, that is, the value of an equivalent current in the coil is fixed.

The value of current and the value of equivalent current are not differentiated any more hereinafter, and are collectively referred to as the value of equivalent current.

From the perspective of moment of force, the magnitude of the moment of force driving the rotor of the stepping motor to rotate is mainly depending on the value of equivalent current in the coil, the structure and the material of the stepping motor and etc. However, after the stepping motor is assembled, the structure and material of the stepping motor are already determined, therefore the magnitude of the moment of force only depends on the value of equivalent current in the coil. If the value of equivalent current provided in the coil of the stepping motor is determined, the minimum value of the equivalent current depends on the maximum value of the current required by the component, for assembling the stepping motor, in actual use, that is, the value of the equivalent current is set according to the maximum current required by the component.

In a case that the electronic expansion valve including the stepping motor is applied in an air conditioning system with complicated operating conditions, such as an automotive air conditioning system, the requirements of the air conditioning system for the moment of force of the electronic expansion valve vary greatly under different operating conditions, and the required moment of force in a poor operating condition may be several times the required moment of the force in a good operating condition. Therefore, in order to meet the requirement for the moment of force in the worst operating condition, it is required to set a large value of equivalent current. However, the good operating conditions do not require the current with the large value, thus may waste electric energy and increase the power consumption. In general case, the worst operating condition occupies a short time, thus if the value of the equivalent current is set according to the worst operating condition, the waste gets more serious as the product cycle increases. And the service life of the product may be reduced when the product is always operated under the current with a large value. The value of equivalent current applied to the stepping motor in the electronic expansion valve in the conventional technology doesn't change, and in the case that the value of equivalent current is large, the stepping motor operates with the current with such a large value during the entire process, which may waste electric energy and increase the power consumption.

In addition, one possible malfunction for the existing electronic expansion valve applied in complicated operating conditions is a motor stalling, that is, the rotor of the stepping motor doesn't rotate when being driven by a certain current. The essential reason is that a friction moment applied to the rotor is greater than a rotation moment, and direct reasons include the decrease of lubricating property of the motor, or foreign matters existing inside the motor and etc. Some of these malfunctions of the electronic expansion valve are insubstantial malfunctions, namely, once a greater moment of force is provided to the electronic expansion valve, the electronic expansion valve may function normally again. However for the above constant-voltage controlled or constant-current controlled electronic expansion valve, since the value of the equivalent current is fixed, the provided moment of force is constant, and in this case, though the malfunction of the electronic expansion valve is not necessarily the substantial malfunction, the electronic expansion valve can only be supposed as a broken-down component, which wastes resource.

### SUMMARY

A controller for an electronic expansion valve is provided in the present application, which can reduce the power consumption of the electronic expansion valve and increases the service life of the electronic expansion valve.

An electronic expansion valve is further provided in the present application, which can reduce the power consumption and overcome insubstantial malfunctions, and has increased service life.

An air conditioning system is further provided in the present application, which employs an improved electronic expansion valve, and can reduce the power consumption and overcome insubstantial malfunctions, and increase the service life of products.

A control method for an electronic expansion valve is further provided in the present application, which can reduce the power consumption of the electronic expansion valve and can overcome insubstantial malfunctions.

A control method for an air conditioning system is further provided in the present application, and an electronic expansion valve employed in the control method can reduce the power consumption and overcome insubstantial malfunctions.

The controller for the electronic expansion valve according to the present application includes an information receiving unit, an operating condition determining unit and a control unit. The information receiving unit is configured to receive sensor information, control command information, or feedback information. The operating condition determining unit configured to determine an operation condition of the electronic expansion valve according to the information received by the information receiving unit, and output a control signal corresponding to the operating condition according to the operating condition of the electronic expansion valve. The control unit is configured to output a current control signal to control inputting a current corresponding to the operating condition into a stepping motor of the electronic expansion valve according to the control signal outputted by the operating condition determining unit.

According to an embodiment of the present application, the operating condition determining unit is configured to output a control signal to the control unit in the case that the operating condition determining unit determines that the electronic expansion valve is performing an initialization operation, the control unit is configured to output a current control signal according to the control signal, the current control signal is configured to input an initialization current into the stepping motor, and the initialization operation is an operation of commanding the electronic expansion valve to go through an entire opening degree range and return to an initial opening degree in the case that the electronic expansion valve starts to operate, the electronic expansion valve is closed, a system abnormity occurs, or the electronic expansion valve is required to perform the initialization operation; and the operating condition determining unit is configured to output a control signal to the control unit in the case that the operating condition determining unit determines that the electronic expansion valve is performing a flow rate control operation, the control unit is configured to output a current control signal according to the control signal, the current control signal is configured to input a second working current into the stepping motor, and the value of the initialization current is greater than the value of the second working current.

According to an embodiment of the present application, the operating condition determining unit is configured to output a control signal to the control unit in the case that the operating condition determining unit determines that a position of a valve needle of the electronic expansion valve is below a preset transition position, and the control unit is configured to output a current control signal according to the control signal, and the current control signal is configured to input a third working current into the stepping motor; and the operating condition determining unit is configured to output a control signal to the control unit in the case that the operating condition determining unit determines that the position of the valve needle of the electronic expansion valve is above or is just the preset transition position, the control unit is configured to output a current control signal according to the control signal, and the current control signal is configured to input a fourth working current, less than the third working current, into the stepping motor, and the preset transition position is a position that the valve needle of the electronic expansion valve is just disengaged from a refrigerant flow passage and the refrigerant flow passage is opened.

According to an embodiment of the present application, the operating condition determining unit is configured to output a control signal to the control unit in the case that the operating condition determining unit determines that a pressure of refrigerant at a refrigerant inlet or a pressure difference between the pressure of refrigerant at the refrigerant inlet and a pressure of refrigerant at a refrigerant outlet of the electronic expansion valve is greater than or equal to a predetermined threshold value, the control unit is configured to output a current control signal according to the control signal, and the current control signal is configured to input a fifth working current into the stepping motor; and the operating condition determining unit is configured to output a control signal to the control unit in the case that the operating condition determining unit determines that the pressure of refrigerant at the refrigerant inlet or the pressure difference between the pressure of refrigerant at the refrigerant inlet and the pressure of refrigerant at the refrigerant outlet of the electronic expansion valve is less than the predetermined threshold value, the control unit is configured to output a current control signal according to the control signal, and the current control signal is configured to input a sixth working current, less than the fifth working current, into the stepping motor.

According to an embodiment of the present application, the operating condition determining unit is configured to output a control signal to the control unit in the case that the operating condition determining unit determines that the stepping motor of the electronic expansion valve stalls, the control unit is configured to output a current control signal according to the control signal, and the current control signal is configured to input a seventh working current into the stepping motor; and the operating condition determining unit is configured to output a control signal to the control unit in the case that the operating condition determining unit determines that the stepping motor of the electronic expansion valve does not stall, the control unit is configured to output a current control signal according to the control signal, and the current control signal is configured to input an eighth working current, less than the seventh working current, into the stepping motor.

According to an embodiment of the present application, a signal indicating whether the stepping motor stalls is determined by detecting a flow rate of the refrigerant of the electronic expansion valve, the controller for the electronic expansion valve is configured to obtain a current actual value of the flow rate of the refrigerant via a sensor, and a current opening degree information of the electronic expansion valve is stored in a memorizer of the controller for the electronic expansion valve, and the controller for the electronic expansion valve is configured to obtain a current theoretical value of the flow rate of the refrigerant according to a correspondence relationship between the opening degree information and the flow rate of the refrigerant, and in the case that a difference between the actual value and the theoretical value of the flow rate of the refrigerant is small, it is determined that the electronic expansion valve operates normally; and in the case that the difference between the actual value and the theoretical value of the flow rate of the refrigerant is greater than a threshold value, it is determined that the stepping motor of the electronic expansion valve stalls.

According to an embodiment of the present application, a signal indicating whether the stepping motor stalls is determined by detecting a back electromotive force generated on a coil of the stepping motor of the electronic expansion valve, and it is determined that the stepping motor stalls in the case that a value of the back electromotive force is smaller than a threshold value.

An electronic expansion valve is provided by the present application, which includes a valve body and a controller for the electronic expansion valve, wherein the valve body includes a passage allowing refrigerant to flow, a valve needle configured to cooperate with the passage, and a stepping motor configured to control the motion of the valve needle to adjust an opening degree of the passage of the refrigerant; the controller for the electronic expansion valve is configured to output, according to an operating condition of the electronic expansion valve, a control signal corresponding to the operation condition to control inputting a current into the stepping motor, to drive the stepping motor to rotate, and the stepping motor is configured to rotate to drive the valve needle to move, to adjust the opening degree of the passage of the refrigerant.

According to an embodiment of the present application, the controller for the electronic expansion valve includes a local interconnect network (LIN) transceiver module, a central processing module, a drive and control module and a drive module. The LIN transceiver module is configured to receive a control command, outputted by an air-conditioning controller according to an operating condition of the stepping motor via a LIN bus, and convert the control command into a control command signal which is receivable by the central processing module. The central processing module is configured to parse the control command signal sent by the LIN transceiver module and output a current control signal. The drive and control module is configured to receive the current control module sent by the central processing module, perform a comparison operation and output a drive control signal. The drive module is configured to input a current into the stepping motor according to the drive control signal outputted by the drive and control module.

According to an embodiment of the present application, the controller for the electronic expansion valve includes a central control module, a drive and control module, and a drive module which are all integrated in an air-conditioning controller. The central control module is configured to output a current control signal according to an operating condition of the stepping motor. The drive and control module is configured to receive the current control signal sent by the central control module, perform a comparison operation and output a drive control signal. The drive module is configured to input a current into the stepping motor according to the drive control signal outputted by the drive and control module.

According to an embodiment of the present application, in the case that the electronic expansion valve is performing an initialization operation, the controller for the electronic expansion valve is configured to input an initialization working current into the stepping motor, the initialization operation is an operation of commanding the electronic expansion valve to go through an entire opening degree range and return to an initial opening degree in the case that the electronic expansion valve starts to operate, the electronic expansion valve is closed, a system abnormity occurs, or the electronic expansion valve is required to perform the initialization operation; and in the case that the electronic expansion valve is performing a flow rate control operation, the controller for the electronic expansion valve is configured to control the drive and control module to control the drive module to input a second working current into the stepping motor, and a value of the initialization working current is greater than a value of the second working current.

According to an embodiment of the present application, an initialization operation command is configured to realize control by providing a separate initialization signal bit in a signal sent by the air-conditioning controller to the controller for the electronic expansion valve, or by continuously sending a minimum opening degree signal or a maximum opening degree signal, the maximum opening degree or the minimum opening degree, and an initial opening degree to the controller for the electronic expansion valve by the air-conditioning controller, or by continuously sending a command corresponding to the minimum opening degree or the maximum opening degree, or a command corresponding to the maximum opening degree or the minimum opening degree, and the initial opening degree, to the drive and control module by the air-conditioning controller.

According to an embodiment of the present application, in the case that a position of the valve needle of the electronic expansion valve is below a preset transition position, the controller for the electronic expansion valve is configured to input a third working current into the stepping motor; and in the case that the position of the valve needle of the electronic expansion valve is above or is just the preset transition position, the controller for the electronic expansion valve is configured to input a fourth working current, less than the third working current, into the stepping motor, wherein the preset transition position is a position where the valve needle is located in the case that the valve needle is disengaged from the passage of the refrigerant after the stepping motor of the electronic expansion valve rotates by a certain degree and the passage of the refrigerant is opened.

According to an embodiment of the present application, in the case that a pressure of refrigerant at a refrigerant inlet or a pressure difference between the pressure of refrigerant at the refrigerant inlet and a pressure of refrigerant at a refrigerant outlet of the electronic expansion valve is greater than or equal to a predetermined threshold value, the controller for the electronic expansion valve is configured to input a fifth working current into the stepping motor; and in the case that the pressure of refrigerant at the refrigerant inlet or the pressure difference between the pressure of refrigerant at the refrigerant inlet and the pressure of refrigerant at the refrigerant outlet of the electronic expansion valve is less than the predetermined threshold value, the controller for the electronic expansion valve is configured to input a sixth working current, less than the fifth working current, into the stepping motor.

According to an embodiment of the present application, in the case that the stepping motor of the electronic expansion valve stalls, the controller for the electronic expansion valve is configured to input a seventh working current into the stepping motor; and in the case that the stepping motor of the electronic expansion valve does not stall, the controller for the electronic expansion valve is configured to input an eighth working current, less than the seventh working current, into the stepping motor.

According to an embodiment of the present application, a signal indicating whether the stepping motor stalls is determined by detecting a flow rate of the refrigerant of the electronic expansion valve, the controller for the electronic expansion valve is configured to obtain a current actual value of the flow rate of the refrigerant via a sensor, and a current opening degree information of the electronic expansion valve is stored in a memorizer of the controller for the electronic expansion valve, and the controller for the electronic expansion valve is configured to obtain a current theoretical value of the flow rate of the refrigerant according to a correspondence relationship between the opening degree information and the flow rate of the refrigerant, and in the case that a difference between the actual value and the theoretical value of the flow rate of the refrigerant is small, it is determined that the electronic expansion valve operates normally; and in the case that the difference between the actual value and the theoretical value of the flow rate of the refrigerant is greater than a threshold value, it is determined that the stepping motor of the electronic expansion valve stalls.

According to an embodiment of the present application, a signal indicating whether the stepping motor stalls is determined by detecting a back electromotive force generated on a coil of the stepping motor of the electronic expansion valve, and it is determined that the stepping motor stalls in the case that a value of the back electromotive force is smaller than a threshold value.

An air conditioning system is provided by the present application, which includes a compressor, a condenser, an evaporator and an electronic expansion valve, wherein refrigerant is configured to pass through the electronic expansion valve to form a circulation in the condenser, the evaporator and the compressor, and the electronic expansion valve is the above-described electronic expansion valve.

A control method for an electronic expansion valve is provided by the present application, the electronic expansion valve includes a valve body and a controller for the electronic expansion valve, the valve body includes a passage allowing refrigerant to flow, a valve needle configured to cooperate with the passage, and a stepping motor configured to control the motion of the valve needle to adjust an opening degree of the passage of the refrigerant, and the stepping motor is controlled by the controller for the electronic expansion valve, wherein the control method includes:
determining, by the controller for the electronic expansion valve, an operating condition of the electronic expansion valve according to received information, and inputting, by the controller for the electronic expansion valve, a current corresponding to the operating condition into the stepping motor of the electronic expansion valve according to the operating condition of the electronic expansion valve

According to an embodiment of the present application, the control method includes:
inputting, by the controller for the electronic expansion valve, an initialization working current into the stepping motor in the case that the controller for the electronic expansion valve determines that the electronic expansion valve is performing an initialization operation, wherein the initialization operation is an operation of commanding the electronic expansion valve to go through an entire opening degree range and return to an initial opening degree in the case that the electronic expansion valve starts to operate, the electronic expansion valve is closed, a system abnormity occurs, or the electronic expansion valve is required to perform the initialization operation; and
inputting, by the controller for the electronic expansion valve, a second working current into the stepping motor of the electronic expansion valve in the case that the controller for the electronic expansion valve determines that the electronic expansion valve is performing a flow rate control operation, wherein a value of the initialization working current is greater than a value of the second working current.

According to an embodiment of the present application, an initialization operation command is configured to realize control by providing a separate initialization signal bit in a signal sent by an air-conditioning controller to the controller for the electronic expansion valve, or by continuously sending a minimum opening degree signal or a maximum opening degree signal, the maximum opening degree or the minimum opening degree, and an initial opening degree to the controller for the electronic expansion valve by the air-conditioning controller, or by continuously sending a command corresponding to the minimum opening degree or the maximum opening degree, or a command corresponding to the maximum opening degree or the minimum opening degree, and the initial opening degree, to a drive and control module by the air-conditioning controller.

According to an embodiment of the present application, the control method includes:
inputting, by the controller for the electronic expansion valve, a third working current into the stepping motor in the case that the controller for the electronic expansion valve determines that a position of the valve needle of the electronic expansion valve is below a preset transition position; and
inputting, by the controller for the electronic expansion valve, a fourth working current into the stepping motor in the case that the position of the valve needle of the electronic expansion valve is above or is just the preset transition position, wherein the fourth working current is less than the third working current, and the preset transition position is a position where the valve needle is located in the case that the valve needle is disengaged from the passage of the refrigerant after the stepping motor of the electronic expansion valve rotates by a certain degree and the passage of the refrigerant is opened.

According to an embodiment of the present application, the control method includes:
inputting, by the controller for the electronic expansion valve, a fifth working current into the stepping motor in the case that the controller for the electronic expansion valve determines that a pressure of refrigerant at a refrigerant inlet or a pressure difference between the pressure of refrigerant at the refrigerant inlet and a pressure of refrigerant at a refrigerant outlet of the electronic expansion valve is greater than or equal to a predetermined threshold value; and
inputting, by the controller for the electronic expansion valve, a sixth working current into the stepping motor in the case that the pressure of refrigerant at the refrigerant inlet or the pressure difference between the pressure of refrigerant at the refrigerant inlet and the pressure of refrigerant at the refrigerant outlet of the electronic expansion valve is less than the predetermined threshold value, wherein the sixth working current is less than the fifth working current.

According to an embodiment of the present application, the control method includes:
inputting, by the controller for the electronic expansion valve, a seventh working current into the stepping motor in the case that the controller for the electronic expansion valve determines that the stepping motor of the electronic expansion valve stalls; and
inputting, by the controller for the electronic expansion valve, an eighth working current into the stepping motor in the case that the controller for the electronic expansion valve determines that the stepping motor of the electronic expansion valve does not stall, wherein the eighth working current is less than the seventh working current.

According to an embodiment of the present application, a signal indicating whether the stepping motor stalls is determined by detecting a flow rate of the refrigerant of the electronic expansion valve, the controller for the electronic expansion valve is configured to obtain a current actual value of the flow rate of the refrigerant via a sensor, and a current opening degree information of the electronic expansion valve is stored in a memorizer of the controller for the electronic expansion valve, and the controller for the electronic expansion valve is configured to obtain a current theoretical value of the flow rate of the refrigerant according to a correspondence relationship between the opening degree information and the flow rate of the refrigerant, and in the case that a difference between the actual value and the theoretical value of the flow rate of the refrigerant is small, it is determined that the electronic expansion valve operates normally; and in the case that the difference between the actual value and the theoretical value of the flow rate of the refrigerant is greater than a threshold value, it is determined that the stepping motor of the electronic expansion valve stalls.

According to an embodiment of the present application, a signal indicating whether the stepping motor stalls is determined by detecting a back electromotive force generated on a coil of the stepping motor of the electronic expansion valve, and it is determined that the stepping motor stalls in the case that a value of the back electromotive force is smaller than a threshold value.

A control method for an air conditioning system is provided by the present application, the air conditioning system includes a compressor, a condenser, an evaporator and an electronic expansion valve, refrigerant is configured to pass through the electronic expansion valve to form a circulation in the condenser, the evaporator and the compressor, and a control method for the electronic expansion valve is the above-described control method for the electronic expansion valve.

Compared with the conventional technology, the electronic expansion valve in the air conditioning system according to the present application may input corresponding currents into the stepping motor of the electronic expansion valve according to different operating conditions of the electronic expansion valve, and can effectively reduce the energy consumption of the electronic expansion valve. In the case that the stepping motor of the electronic expansion valve stalls, a large current may be inputted into the stepping motor to overcome the insubstantial malfunction. Compared to the solution that the electronic expansion valve always employs the maximum operating current, the electronic expansion valve in the present application employs corresponding currents according to different operating conditions, thus the service life of the electronic expansion valve can be increased.

### BRIEF DESCRIPTION OF THE DRAWINGS

Figure 1 is a schematic view showing the structure of a valve body of an electronic expansion valve according to the present application;
Figure 2 is a block diagram showing the structure of an embodiment of a controller for the electronic expansion valve according to the present application;
Figure 3 is a schematic view of a LIN signal in the controller for the electronic expansion valve according to the present application;
Figure 4 is a schematic view showing the structure of a central processing module of the controller for the electronic expansion valve according to the present application;
Figure 5 is a block diagram showing the structure of a drive and control module of the controller for the electronic expansion valve according to the present application;
Figure 6 is a block diagram showing the structure of a current magnitude driving and controlling unit of the drive and control module of the controller for the electronic expansion valve according to the present application;
Figure 7 is a schematic view showing the structure of a drive circuit of the controller for the electronic expansion valve according to the present application;
Figure 8 is a block diagram showing the data transmission, via a serial peripheral interface (SPI) bus, between the central processing module and the drive and control module of the controller for the electronic expansion valve according to the present application;
Figure 9 is an oscillogram of data when the central processing module and the drive and control module of the controller for the electronic expansion valve according to the present application transmit data via the SPI bus;
Figure 10 is a block diagram showing the structure of another embodiment of the controller for the electronic expansion valve according to the present application;
Figure 11 is a flow chart of a first embodiment of a control method for the electronic expansion valve according to the present application, wherein the control is performed according to two different operation modes of the electronic expansion valve;
Figure 12 is a schematic view showing the relationship between a friction moment and a position of a valve needle of the electronic expansion valve according to the present application;
Figure 13 is a flow chart of a second embodiment of a control method for the electronic expansion valve according to the present application, wherein the control is performed according to different positions of the valve needle of the electronic expansion valve;
Figure 14 is a flow chart of a third embodiment of a control method for the electronic expansion valve according to the present application, wherein the control is performed according to different pressures of refrigerant of the electronic expansion valve;
Figure 15 is a flow chart of a fourth embodiment of a control method for the electronic expansion valve according to the present application, wherein the control is performed according to the situation that the motor stalling of the electronic expansion valve occurs or not;
Figure 16 is a flow chart of a fifth embodiment of a control method for the electronic expansion valve according to the present application, wherein the control is performed according to different operation modes of the electronic expansion valve and different positions of the valve needle;
Figure 17 is a flow chart of a sixth embodiment of a control method for the electronic expansion valve according to the present application, wherein the control is performed according to different operation modes of the electronic expansion valve, different positions of the valve needle, and different pressures of refrigerant; and
Figure 18 is a schematic view showing the structure of an air conditioning system according to the present application.

### DETAILED DESCRIPTION

Embodiments of the present application are described in conjunction with drawings hereinafter.

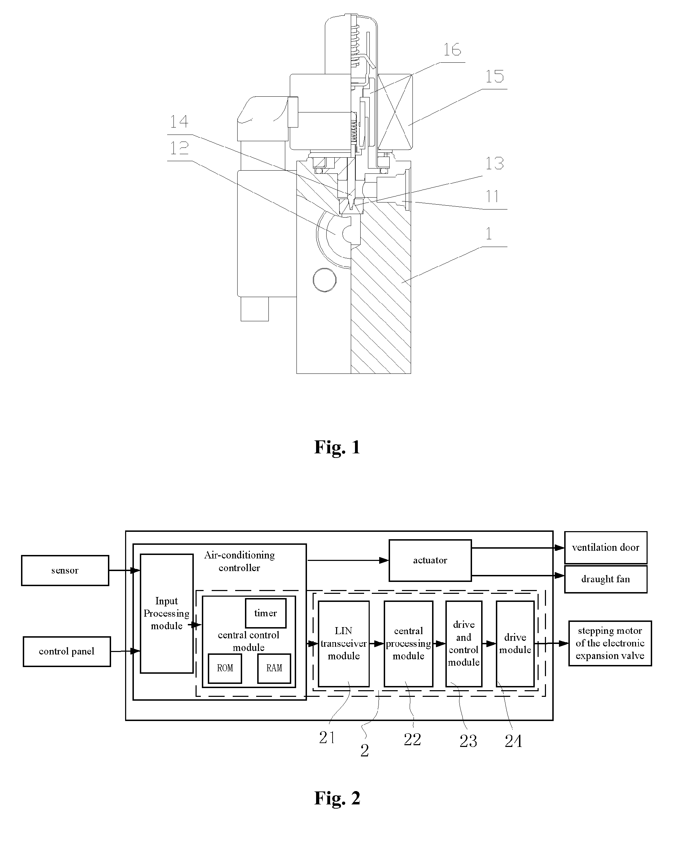

An electronic expansion valve according to the present application includes a mechanical valve body and a controller configured to control the valve body. Reference is made to Figure 1, which is a schematic view showing the structure of the mechanical valve body of the electronic expansion valve according to the present application. As shown in Figure 1, a valve body 1 of the electronic expansion valve according to the present application includes a refrigerant inlet 11, a refrigerant outlet 12, and a passage formed inside the valve body and configured to allow the refrigerant to flow, and an orifice 13 is formed inside the passage. A valve needle 14 is provided inside the valve body, a stepping motor is provided above the valve body 1, and the stepping motor includes a stator coil 15 and a rotor 16. A current may be inputted into the stator coil 15 under the control of a controller for the electronic expansion valve, and when the current is inputted into the stator coil 15, the stator coil 15 may drive the rotor 16 to rotate, and since the valve needle 14 is elastically connected to the rotor 16 of the stepping motor, the valve needle 14 can move upward and downward with the rotation of the rotor 16 of the stepping motor. When the valve needle 14 moves downward to come into contact with the orifice 13 of the refrigerant flow passage, the orifice of the refrigerant flow passage may be blocked, thus the refrigerant can't circulate through the electronic expansion valve. When the valve needle 14 moves upwards to be disengaged from the orifice 13 in the refrigerant flow passage, the refrigerant flow passage is opened, thus the refrigerant can enter via the refrigerant inlet 11, pass through the refrigerant flow passage and then flow out via the refrigerant outlet 12. The opening degree of the refrigerant flow passage of the electronic expansion valve can be controlled by controlling a distance of the valve needle 14 moving away from the orifice 13 of the refrigerant flow passage.

Reference is made to Figure 2, which is a schematic view showing the structure of an embodiment of a controller for the electronic expansion valve according to the present application. The electronic expansion valve in this embodiment according to the present application can be applied in the air conditioning systems. As shown in Figure 2, the controller for the electronic expansion valve according to the present application includes a local interconnect network (LIN) transceiver module 21, a central processing module 22, a drive and control module 23 and a drive module 24.

In this embodiment, the controller for the electronic expansion valve communicates with an upper level controller (such as an air-conditioning controller) via a LIN bus. The LIN transceiver module 21 receives a frame command from the LIN bus, converts a voltage level of digital signals constituting the frame and then sends the converted voltage level to the central processing module 22, and receives, converts and transmits the signal sent from the central processing module 22. The frame command may include a command type of the electronic expansion valve, a target opening degree information, a current magnitude information, and etc.

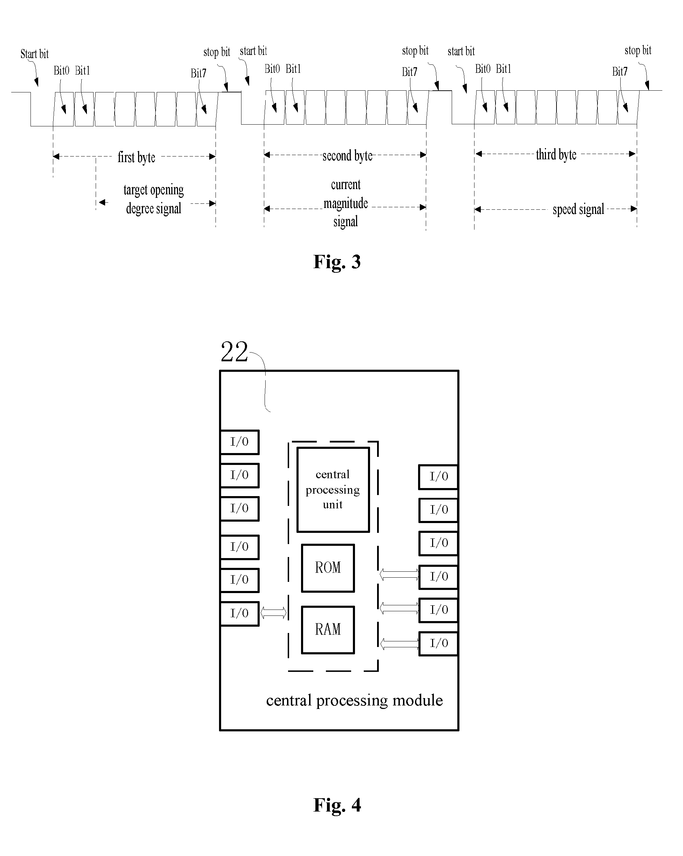

One LIN frame generally includes a frame header and a frame response. Reference is made to Figure 3, which is a schematic view showing the distribution of the frame response of a LIN command frame. The frame response of one LIN command includes at most 9 bytes, each byte includes 8 bits, and different bits of different bytes can be used to indicate different commands. For example, Bit1 of the first byte of the LIN command frame can be an initialization signal, and in the case that Bit1 is 1, it means that an initialization is required to be performed; and in the case that Bit1 is 0, it means that the initialization is not required to be performed. The remaining six bits of the first byte indicate the target opening degree, for example, 111111 indicates that the opening degree is 100%, 000000 indicates that the opening degree is 0%. The value of the target opening degree may be ultimately converted into the value of a step size of the stepping motor by the controller for the electronic expansion valve, for example the opening degree of 50% corresponds to the position of the step size of the stepping motor being 240 steps. 8 bits of the second byte indicate the current magnitude information of the current required to be inputted into the stepping motor, for example, 10000000 indicates a first current, 01000000 indicates a second current. The electronic expansion valve may be controlled to accomplish an initialization process by only sending the initialization signal, or only sending different target opening degree signals continuously. For example, when it is required to send the initialization command, one bit in the LIN command signal may be separately set to indicate that whether the initialization operation needs to be performed, and in the case that this bit is 1, it indicates that the initialization operation needs to be performed, and in this time, the valve needle of the electronic expansion valve moves from the current position to a minimum position, then moves from the minimum position to a maximum position, and then moves from the maximum position to the current position, thereby completing the entire initialization process. Or, instead of providing a separate bit in the LIN signal to indicate whether to perform the initialization operation or not, three opening degree commands are directly and continuously sent via the LIN command, to control the valve needle of the electronic expansion valve to move from the current position to the minimum position, then move from the minimum position to the maximum position, and then move from the maximum position to the current position, thereby completing the initialization process. Besides, instead of directly sending the opening degree command, other transformed commands corresponding to the positions of the minimum opening degree and the maximum opening degree are sent, for example, a percentage of the maximum opening degree and etc. For example, if the maximum opening degree is indicated as 111111, a percentage information may be added behind the command of the maximum opening degree to indicate the magnitude of the opening degree, for example, 111111 111 indicates that the maximum opening degree is 100%, 111111 110 indicates that the opening degree is 80%, and 111111 101 indicates that the opening degree is 60%.

In addition to the LIN command frame, a LIN request frame is also provided. The LIN request frame is configured to feed back a state of the electronic expansion valve to the air-conditioning controller. The frame response of one LIN request frame includes at most 9 bytes, each byte includes 8 bits, and different bits of different bytes can be used to define different signals to indicate the state of the electronic expansion valve (EXV). For example, Bit0 and Bit1 of the first byte may be defined to jointly constitute an initialization state signal of the EXV, and in the case that Bit0 and Bit1 are 00, it means that the EXV has not completed the initialization; in the case that Bit0 and Bit1 are 01, it means that the EXV is performing the initialization; and in a case that Bit0 and Bit1 are 10, it means that the EXV has completed the initialization. The remaining six bits of the first byte indicate the current opening degree of the EXV. Bit0 of the second byte is defined as a signal to indicate whether motor stalling occurs or not, and in the case that Bit0 is 1, it means that the drive and control module detects that the motor stalling occurs.

The LIN transceiver module can be embodied as a separate integrated circuit chip.

Referring to Figure 4, the central processing module 22 according to the present application includes a central processing unit (CPU), a random access memory (RAM), a read-only memory (ROM), a timer and multiple input/output (I/O) ports. The central processing module 22 is configured to parse the meaning of a frame inputted by the LIN transceiver module, send a parsed control signal for the electronic expansion valve to the drive and control module 23, receive and transmit a signal fed back by the drive and control module 23, and record or store the current opening degree of the electronic expansion valve. Specifically, the central processing module 22 firstly determines a frame identifier in a frame header. In the case that it is determined that the frame information is a command frame pointing to the electronic expansion valve, the central processing module 22 further receives a frame response and parses the signal in the frame response. If the parsed result requires the electronic expansion valve to move from the current opening degree to a new opening degree, the central processing module 22 calculates the value of a step size required to be provided to the drive and control module 23 and the information of a driving direction (namely a rotation direction) of the motor according to the current opening degree and the new opening degree, and meanwhile the central processing module 22 parses the current magnitude information, which is inputted into the stepping motor by the air-conditioning controller in the LIN bus according to the output requirements of different operating conditions of the electronic expansion valve. For example, if the parsed result requires inputting a first current, the central processing module provides the information of the step size, the driving direction of the motor, the current magnitude and the like to the drive and control module 23. The central processing module may be an 8-bit single chip microcomputer.

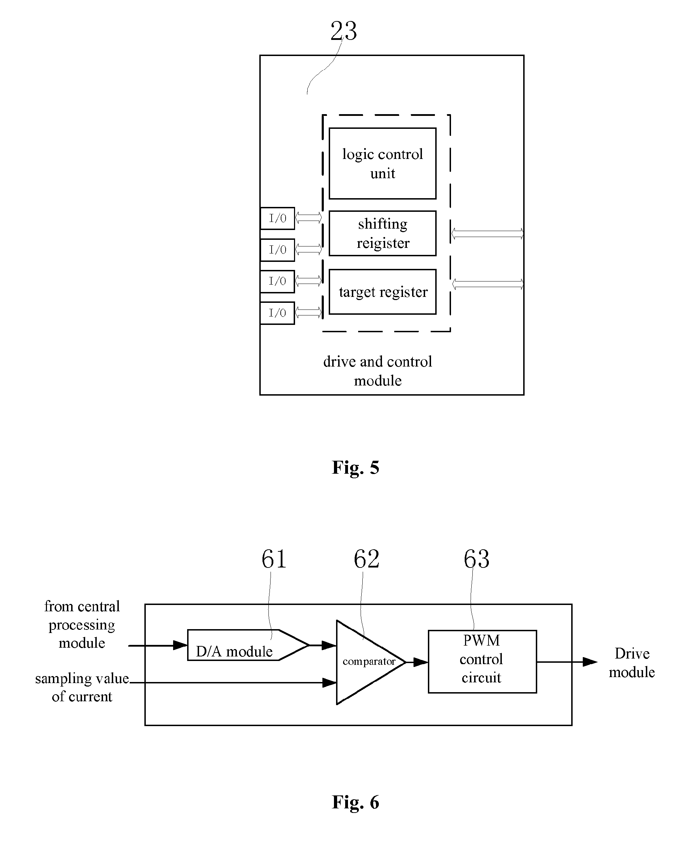

The drive and control module 23 receives the information of the step size, the driving direction of the motor, the current magnitude and the like, and adjusts and outputs a control signal to control a switch tube of the drive module 24 to be switched on and switched off. As shown in Figure 5, which is a block diagram showing the structure of the drive and control module 23 of the electronic expansion valve according to the present application, the drive and control module 23 according to the present application includes a logic control unit, a shift register and a target register, and etc.

The logic control unit of the drive and control module 23 includes a unit for controlling the step size of the stepping motor, a unit for controlling the rotation direction of the stepping motor, and a unit for controlling the current magnitude of the stepping motor. The unit for controlling the current magnitude of the stepping motor is described as an example, referring to Figure 6, which is a block diagram showing the structure of an electric circuit in the drive and control module according to the present application, which is used to control the current magnitude of the stepping motor, and in this embodiment, the unit for controlling the current magnitude of the stepping motor includes a digital-to-analogue conversion module (D/A module) 61, a comparator 62 and a pulse-width modulation (PWM) control circuit 63. The digital-to-analogue conversion module 61 converts a digital signal from the central processing module 22 into an analog signal, for example, the digital signal of the current magnitude sent from the central processing module 22 is 10000000, the digital-to-analogue conversion module 61 converts the digital signal into an analog voltage signal. An output signal of the digital-to-analogue conversion module 61 is inputted into one input port of the comparator 62, a current signal of the motor collected by a current-sensing circuit is inputted into another input port of the comparator 62, and when the value of the collected current is smaller than the value of the current inputted by the central processing module 22, the comparator 62 outputs a level signal to control the PWM control circuit 63 to control the drive module 24 to input a larger current into the stepping motor, until the value of the collected circuit is equal to the value of the current inputted by the central processing module 22; and when the value of the collected current is greater than the value of the current inputted by the central processing module, the comparator outputs another level signal, to control the PWM control circuit to control the drive module to stop the current of the stepping motor from being increased any more. When digital values representing the current magnitude sent from the central processing module are different, the corresponding current values of the stepping motor are different.

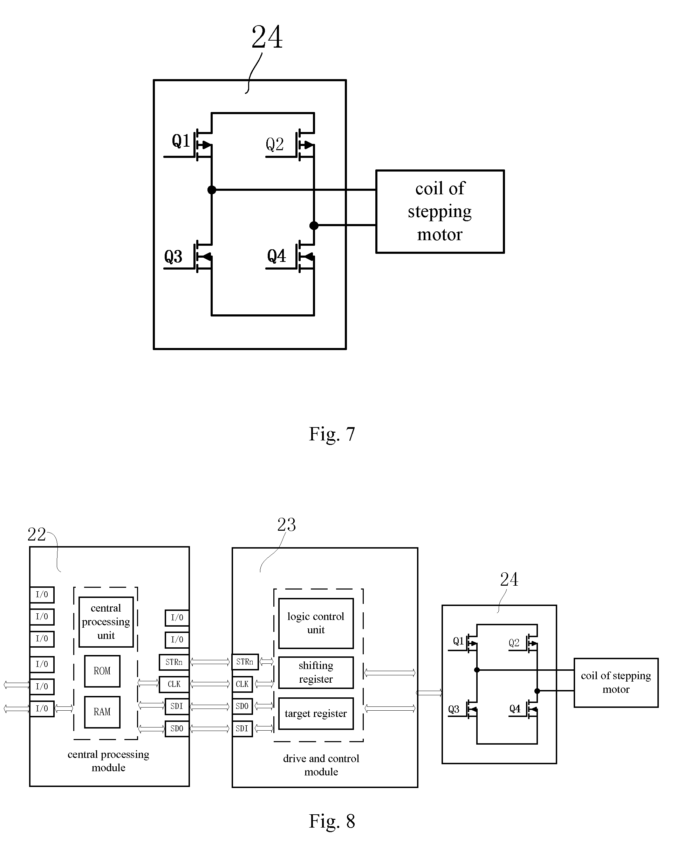

Referring to Figure 7, which is a schematic view showing the structure of a driving circuit according to the present application, the driving circuit according to the present application employs an H-bridge driving circuit to drive a coil of each phase of the stepping motor. As shown in Figure 7, the H-bridge driving circuit includes four switch tubes Q1, Q2, Q3 and Q4, the switch tubes Q1 and Q4 together with the coil of the stepping motor form one loop, and the switch tubes Q2 and Q3 together with the coil of the stepping motor form another loop. When the switch tubes Q1 and Q4 are switched on, the coil of the stepping motor is energized in one direction, and when the switch tubes Q2 and Q3 are switched on, the coil of the stepping motor is energized in another direction. A control port of each of the switch tubes Q1, Q2, Q3 and Q4 is controlled via a PWM pulse signal outputted by the drive and control module. When the digital values representing the current magnitude sent from the central processing module are different, accordingly the switched-on durations of the switch tubes are different, thus the current magnitude of the stepping motor is controllable. Generally, the drive module and the drive and control module may be integrated in one integrated circuit.

The signal transmission between the central processing module 22 and the drive and control module 23 is realized in a bus mode, and reference is made to Figure 8, which is a schematic view showing the central processing module of the present application in communication with the drive and control module in the SPI bus mode. Only several pins of the central processing module are shown in the Figure, several output ports are used by the central processing module 22 when the signal transmission is performed in the SPI bus mode, and include output ports of a chip select signal (STRn), a clock signal (CLK), a slave device data input signal (SDI), and a slave device data output signal (SDO), and the SPI bus transmission protocol will not be described in detail in the present application.

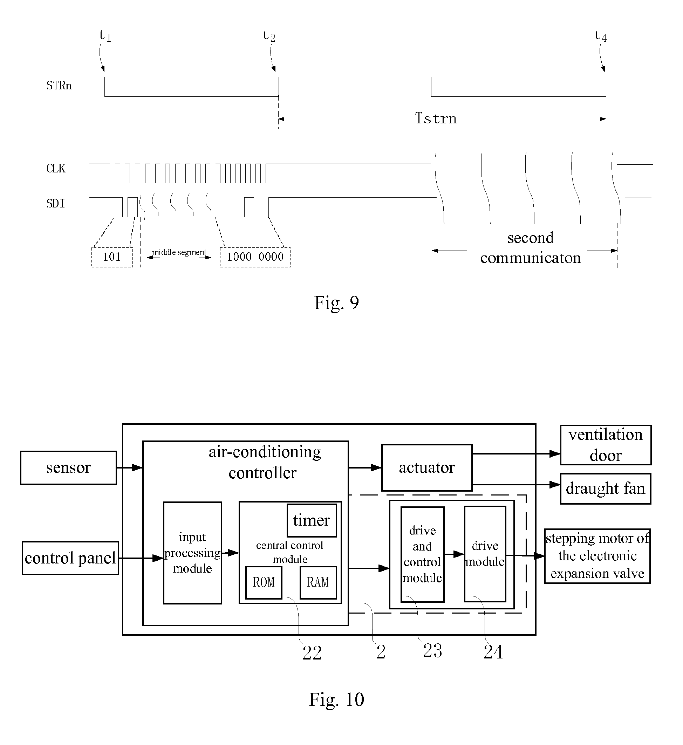

Reference is made to Figure 9, which shows signal waveforms when the central processing module 22 is in communication with the drive and control module 23 in the SPI bus mode. Since control signals are mainly outputted from the central processing module 22 to the drive and control module 23, only the waveforms of the chip select signal (STRn), the clock signal (CLK) and the slave device data input signal (SDI) are shown in the Figure, and the waveform of the slave device data output signal (SDO) is not shown in the Figure. When the chip select signal outputted by the central processing module 22 shifts from a high level to a low level, the chip select signal (STRn) takes effect, that is, starting one SPI communication between the central processing module 22 and the drive and control module 23. After the chip select signal (STRn) takes effect, the central processing module 22 sends a clock signal (CLK) to the drive and control module via the clock signal outputting port. The central processing module 22 outputs data to the drive and control module 23 via the SDI port.

Every time the clock signals are at the rising edge, the drive and control module stores the data inputted by the SDI port in the shifting register. The drive and control module continuously stores the data outputted by the SDI port in the internal shifting register by continuously sending the clock signals. When the chip select signal shifts from the low level to the high level, the drive and control module 23 transfers the data stored in the shifting register into the target register. The logic control unit controls the drive module 24 according to a control word stored in the target register. For example for the control of the current magnitude of the stepping motor, the digital signal representing the current magnitude is inputted by the central processing module 22 into the drive and control module 24 via the SDI port, and the corresponding digital value is firstly stored in the shifting register then is stored in a corresponding target register, and then are inputted into a unit for controlling the current magnitude in the logic control unit.

As shown in Figure 9, the slave device data input signal (SDI) in a first SPI communication is divided into three sections, a starting section is a control command section, a middle section may include other information, and an end section may include the current magnitude information, and the information in the middle section is irrelevant to the current, which will not be described herein.

A value of the starting section corresponding to the rising edge of the clock signal (CLK) is 101, the first two bits of which indicate an address of the target register where the data is to be stored, and 10 indicates that the target register where the data is to be stored is a run register; the third bit is an enable control bit, and 1 indicates an enable drive module.

A value of the end section corresponding to the rising edge of the clock signal (CLK) is 1000 0000, which indicates a first current value; and when the value corresponding to the rising edge of the clock signal (CLK) is 0100 0000, the value indicates a second current value. In the case that the stepping motor is driven in a micro-step method, the digital value inputted into the drive and control module by the central processing module corresponds to a current peak of the stepping motor.

In the above embodiments, the target opening degree and the current magnitude of the electronic expansion valve are calculated by a central control module of the air-conditioning controller according to the collected information, the inputted commands and state information fed back from the electronic expansion valve. Then, the target opening degree and the current magnitude of the electronic expansion valve are transmitted to the LIN transceiver module 21, the central processing module 22, the drive and control module 23 and the drive module 24 of the air-conditioning controller via the LIN bus, to control the stepping motor of the electronic expansion valve. The LIN transceiver module 21, the central processing module 22, the drive and control module 23 and the drive module 24 may be integrated in one integrated circuit.

Reference is made to Figure 10, which is a schematic view showing the structure of another embodiment of the controller for the electronic expansion valve according to the present application. Unlike the embodiment shown in Figure 2, in this embodiment, the LIN transceiver module and the central processing module are not required, and a control signal is directly sent to the drive and control module by the central control module of the air-conditioning controller. As shown in Figure, the central control module of the controller for the air conditioner calculates the information, required to be provided to the drive and control module, of the step size and the driving direction (namely the rotation direction) of the motor according to a switch control signal, a sensor signal and the like, which are processed by an input processor and inputted by the input processor, in conjunction with the current opening degree information stored in a memorizer of the central control module. And then, the central control module of the air-conditioning controller calculates the current magnitude required to be provided to the drive and control module according to the operation conditions of the electronic expansion valve, and provides information of the step size, the driving direction (that is the rotation direction) of the motor and the current magnitude to the drive and control module of the electronic expansion valve, and meanwhile the central control module of the air-conditioning controller further outputs other drive and control signals to control a draught fan module, a ventilation door module and the like via actuators. The drive and control module and the drive module of the stepping motor in this embodiment have the same structures as the drive and control module and the drive module in Figure 2, and the data transmission mode between the central control module and the drive and control module of the air-conditioning controller may also employ the SPI bus mode in the embodiment shown in Figure 2, which will not be repeated herein.

A control method for the electronic expansion valve according to the present application is described hereinafter.

Unlike the electronic expansion valve in the conventional technology always driving the stepping motor with a constant equivalent current, the electronic expansion valve in the present application can input currents with different values into the stepping motor according to different operating conditions. The different operating conditions may include the operating condition depending on whether the electronic expansion valve in an initialization stage or in a flow rate control stage; the operating condition depending on whether the position of the valve needle is in front of a valve opening position or is behind the valve opening position; the operating condition depending on whether a pressure difference between a pressure at a refrigerant inlet and a pressure at a refrigerant outlet of the electronic expansion valve is greater than a preset value or less than the preset value; the operating condition depending on whether the motor of the electronic expansion valve stalls or not. Different operating conditions are described in conjunction with specific embodiments hereinafter. In the above two embodiments of the controller for the electronic expansion valve, the operating conditions of the electronic expansion valve are calculated by the central control module of the air-conditioning controller, thus the following controller for the electronic expansion valve is a generalized controller including the central control module of the controller for the air conditioner.

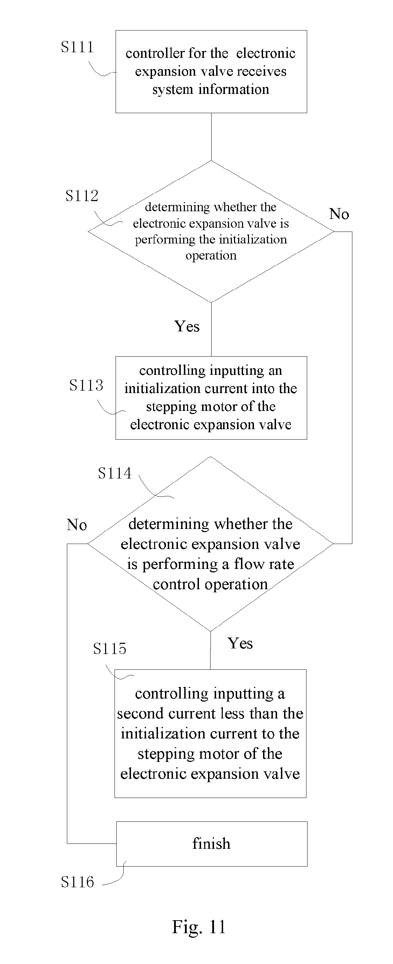

Reference is made to Figure 11, which is a flow chart showing a first embodiment of a control method for the electronic expansion valve according to the present application. In this embodiment, the electronic expansion valve according to the present application has two operation modes, including an initialization operation mode and a flow rate control operation mode, and currents in different operation modes have different values. The control method may include the following steps S111 to S115.

In Step S111, the controller for the electronic expansion valve receives system information, and the system information may be information collected by various kinds of sensors, such as refrigerant flow rate information, and information inputted by a control panel of the air conditioner, and may be state information fed back by the electronic expansion valve (EXV), such as an initialization state information and a current opening degree information.

In Step S 112, the controller for the electronic expansion valve determines whether the electronic expansion valve needs to perform an initialization operation according to the received system information. The electronic expansion valve needs to be initialized when the air conditioning system is opened or closed, to determine whether the electronic expansion valve can normally function. In this time, the valve needle of the electronic expansion valve is required to complete an entire process from the valve needle closing an orifice in the refrigerant passage to the valve needle fully opening the orifice, therefore a large current needs to be provided to cover all conditions during the entire operating process. The initialization operation is not necessarily started from a closed position of the electronic expansion valve, for example, in the case that an automobile is just started and the air conditioner is still in a switched-on state when the automobile stalls at the last time, the valve needle of the electronic expansion valve is not in a closed state but is located at a certain position, such as a position corresponding to the step size of 120 steps, and in this case, the electronic expansion valve may perform the initialization operation from the current position to the position corresponding to the maximum opening degree (a position corresponding to the opening degree of 100%), then moves to the closed position (a position corresponding to the opening degree of 0%), and then returns to the starting position corresponding to the step size of 120 steps. Or the electronic expansion valve may move from the current position to the position corresponding to the minimum opening degree, then moves to the position corresponding to the maximum opening degree, and then returns to the starting position corresponding to the step size of 120 steps. The initialization operation may be started when the controller for the air conditioner receives a command for starting the air conditioning system inputted from the control panel of the air conditioner, or may be started when the air-conditioning controller receives a command for turning off the air conditioning system inputted from the control panel of the air conditioner, or may be started whenever the air-conditioning controller determines that the initialization operation is needed, for example, when the controller for the air conditioner determines that the electronic expansion valve (EXV) is in an uninitialized state or the current position of the electronic expansion valve (EXV) is not trusted. The initialization operation command realizes control by providing a separate initialization signal bit in a signal sent by the air-conditioning controller to the controller for the electronic expansion valve, or by continuously sending the minimum opening degree signal or maximum opening degree signal, the maximum opening degree or the minimum opening degree, and the initial opening degree to the controller for the electronic expansion valve by the air-conditioning controller, or by continuously sending a command corresponding to the minimum opening degree or the maximum opening degree, or a command corresponding to the maximum opening degree or the minimum opening degree, and the initial opening degree, to the drive and control module by the air-conditioning controller. In the present application, when it is determined that it is required to perform the initialization operation, a current for performing the initialization operation is outputted, and the details of the manner for performing the initialization operation will not be described in detail herein. If the controller for the electronic expansion valve determines that the electronic expansion valve needs to perform the initialization operation according to the received information, step S133 is to be performed; and if the controller for the electronic expansion valve determines that the electronic expansion valve does not need to perform the initialization operation according to the received information, step S 134 is to be performed.

In step S 113, in the case that the controller for the electronic expansion valve determines that the electronic expansion valve needs to perform the initialization operation according to the received information, the controller for the electronic expansion valve makes the drive and control module to control the drive module to input an initialization current value, such as 350mA, into the stepping motor of the electronic expansion valve, and the electronic expansion valve performs the initialization operation.

In step S 114, the controller for the electronic expansion valve is configured to determine whether the electronic expansion valve is performing the flow rate control operation if the controller for the electronic expansion valve determines, according to received information, that the electronic expansion valve is not performing the initialization operation. In the case that the electronic expansion valve is performing the flow rate control operation, step S 135 is to be performed, and in the case that the electronic expansion valve is not performing the flow rate control operation, step S 136 is to be performed to terminate the whole process. The flow rate control operation refers to that, during the operation of the air conditioning system, the electronic expansion valve receives a control command to control the opening degree of a refrigerant flow passage by controlling the upward and downward movement of the valve needle, to further control the flow rate. For example, the air conditioner is shifted from a second power position to a third power position, and when the flow rates are controlled, the case of the opening degree being zero rarely occurs, and the position of the minimum step size is generally above a transition position, for example, in an embodiment of the present application, the minimum opening degree of a valve port for controlling the flow rate is 12.5%, and the corresponding minimum step size of the electronic expansion valve is 60 steps.

In step S115, in the case that the controller for the electronic expansion valve determines, according to received information, that the electronic expansion valve is performing the flow rate control operation, the controller for the electronic expansion valve controls the drive and control module to control the drive module to input a second current value, such as 100mA, less than the initialization current value of the above initialization operation into the stepping motor of the electronic expansion valve, and in this case, the electronic expansion valve performs the flow rate control operation.

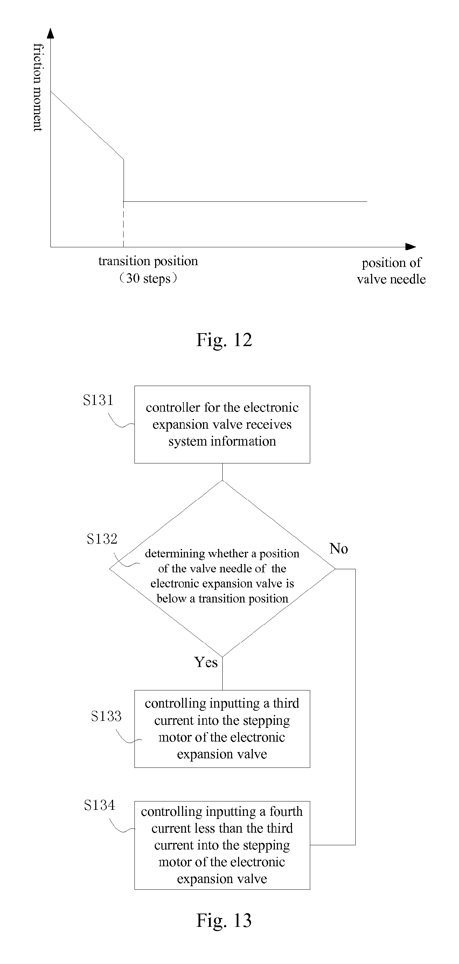

Referring to Figure 12, in the case that the valve needle of the electronic expansion valve is at a position below the transition position, the valve needle is in contact with the orifice in the refrigerant flow passage, a frictional force applied on the valve needle is large, and a friction moment of the rotor is also large, thus it is required to input a large current. In the case that the valve needle of the electronic expansion valve is at a position above the transition position, the valve needle is disengaged from the orifice in the refrigerant flow passage, the frictional force applied on the valve needle is small, and the friction moment of the rotor is small, thus the electronic expansion valve can operate even if a small current is inputted. The transition position of the valve needle corresponds to a transition opening degree, for example, when the opening degree of 100% corresponds to the valve needle at a position of 480 steps, the position of 30 steps corresponds to the opening degree of 6.25%.

Reference is made to Figure 13, which is a flow chart showing a second embodiment of a control method for the electronic expansion valve according to the present application. In this embodiment, different current values are set according to different positions of the valve needle by the electronic expansion valve according to the present application. The specific steps includes step S131 to step S134.

In step S131, the controller for the electronic expansion valve receives system information. The information may be information collected by various kinds of sensors, such as a refrigerant flow rate information, information inputted by a control panel of the air conditioner, and state information fed back by the electronic expansion valve (EXV), such as an initialization state information and a current opening degree information.

In step 132, the controller for the electronic expansion valve determines, according to received information, whether the position of the valve needle of the electronic expansion valve is less than a transition position. If the position of the valve needle of the electronic expansion valve is below the transition position, step S 133 is to be performed, and if the position of the valve needle of the electronic expansion valve is not less than the transition position, step S 134 is to be performed. The transition position is defined in the following way. The electronic expansion valve presets a number of pulses for opening valve, the position of a zero step is defined as a starting point, pulses of the preset number are inputted, the valve needle is disengaged from the orifice only after the rotor of the electronic expansion valve rotates by a predetermined angle, and the refrigerant flow passage is opened, the refrigerant can enter via an inlet of the electronic expansion valve and flow out via an outlet of the electronic expansion valve. When the number of pulses is controlled by the electronic expansion valve to be less than the number of pulses for opening valve, the refrigerant flow passage is still closed, and the refrigerant can't circulate. Thus the position of the valve needle corresponding to the number of pulses for opening valve is the transition position. For example, in an embodiment, the transition position may be the position of the valve needle corresponding to the stepping motor rotating by 30 steps. The rotation of the rotor of the stepping motor is realized by the central processing module (or the central control module of the air-conditioning controller) controlling the drive and control module, thus the central processing module (or the central control module of the air-conditioning controller) knows the current step number position of the valve needle, or information of the step number position is converted into the opening degree information by the central processing module and is fed back to the central control module of the air-conditioning controller via a local interconnect network (LIN) bus. Therefore during the operation of the system, the central control module of the air-conditioning controller compares the current position of the valve needle stored in a memorizer with the transition position, to determine whether the position of the valve needle of the electronic expansion valve is below the transition position.

In step 133, in the case that the position of the valve needle of the electronic expansion valve is below the transition position, the controller for the electronic expansion valve controls the drive and control module to control the drive module to input a third current, such as 250mA, into the stepping motor of the electronic expansion valve.

In step 134, in the case that the position of the valve needle of the electronic expansion valve is above or is just the transition position, the controller for the electronic expansion valve controls the drive and control module to control the drive module to input a fourth current, such as 150mA, less than the third current, into the stepping motor of the electronic expansion valve.

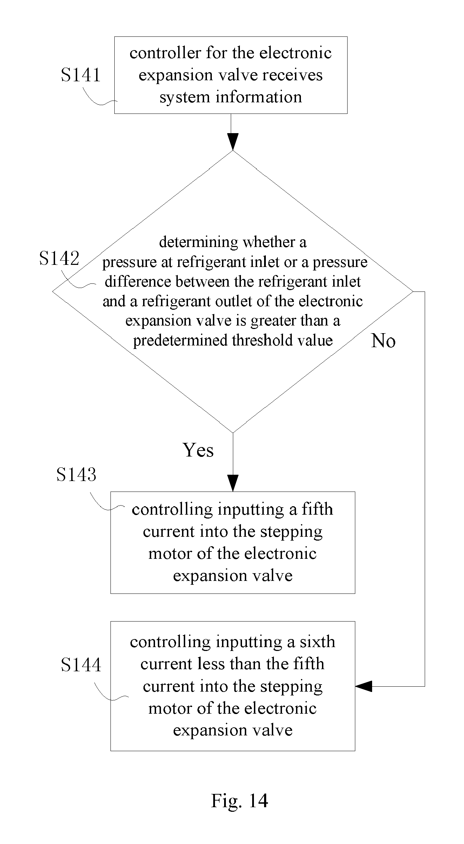

Reference is made to Figure 14, which is a flow chart showing a third embodiment of a control method according to the present application. In this embodiment, considering the effect of the refrigerant pressure difference on the friction moment of the rotor, supposed that the valve needle is located at the position for closing the refrigerant flow passage, at this time, the refrigerant flow passage is closed, and the refrigerant entered via the inlet of the electronic expansion valve is all accumulated above the valve needle, thus the pressure at the inlet of the electronic expansion valve is large. At this time, there is no refrigerant at the refrigerant outlet below the valve needle, thus the pressure at the refrigerant outlet is small. In this case, when the valve needle moves upward to open the refrigerant flow passage, a large frictional force generated by the pressure of the refrigerant needs to be overcame, therefore a large current is required. After the valve needle moves upward by a certain distance, the refrigerant flow passage is opened, the pressure at the refrigerant inlet is decreased, and the pressure at the refrigerant outlet is increased, thus when the valve needle moves, it needs to overcome a small frictional force generated by the pressure of the refrigerant, therefore a small current may be employed. As shown in Figure 14, the specific steps include step S 141 to step S 144.

In step S141, the controller for the electronic expansion valve receives system information. The information may be information collected by various kinds of sensors, such as the refrigerant flow rate information, and information inputted by the control panel of the air conditioner, and may be state information fed back by the electronic expansion valve (EXV), such as the initialization state information, the current opening degree information, and the information regarding whether motor stalling occurs.

In step S142, the controller for the electronic expansion valve determines, according to received information, whether the pressure of refrigerant at the inlet of the electronic expansion valve or a pressure difference between the pressure of refrigerant at the inlet of the electronic expansion valve and the pressure of refrigerant at the outlet of the electronic expansion valve is greater than a predetermined threshold value. Step S143 is to be performed in the case that the pressure of refrigerant at the inlet of the electronic expansion valve or the pressure difference between the pressure of refrigerant at the inlet of the electronic expansion valve and the pressure of refrigerant at the outlet of the electronic expansion valve is greater than or equal to the predetermined threshold value. Step S144 is to be performed in the case that the pressure of refrigerant at the inlet of the electronic expansion valve or the pressure difference between the pressure of refrigerant at the inlet of the electronic expansion valve and the pressure of refrigerant at the outlet of the electronic expansion valve is less than the predetermined threshold value.

In step S 143, in the case that it is determined by the controller for the electronic expansion valve that the pressure of refrigerant at the inlet of the electronic expansion valve or the pressure difference between the pressure of refrigerant at the inlet of the electronic expansion valve and the pressure of refrigerant at the outlet of the electronic expansion valve is greater than or equal to the predetermined threshold value, the controller for the electronic expansion valve controls the drive and control module to control the drive module to input a fifth current, such as 300mA, into the stepping motor of the electronic expansion valve.

In step S144, in the case that it is determined by the controller for the electronic expansion valve that the pressure of refrigerant at the inlet of the electronic expansion valve or the pressure difference between the pressure of refrigerant at the inlet of the electronic expansion valve and the pressure of refrigerant at the outlet of the electronic expansion valve is less than the predetermined threshold value, the controller for the electronic expansion valve controls the drive and control module to control the drive module to input a sixth current, such as 200mA, less than the fifth current, into the stepping motor of the electronic expansion valve.

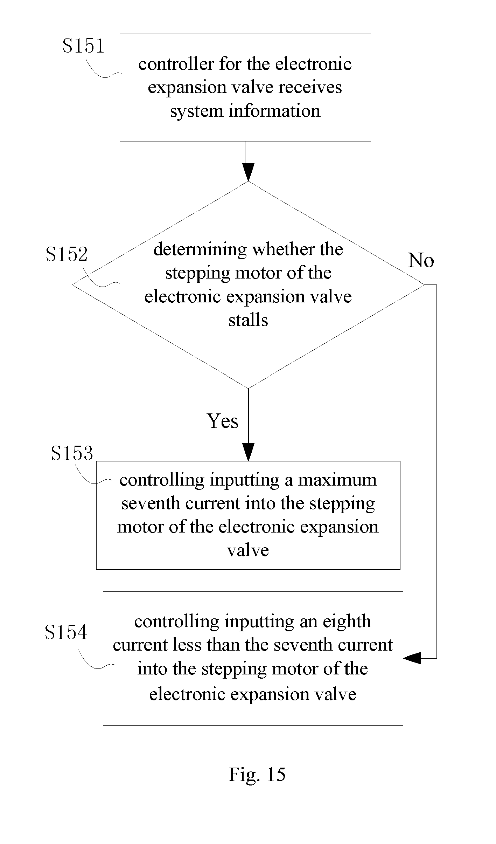

Reference is made to Figure 15, which shows a flow chart of a fourth embodiment of a control method according to the present application. In this embodiment, since motor stalling may occur to the stepping motor of the electronic expansion valve, and when motor stalling occurs, which is sometimes just a temporary insubstantial malfunction, if a large current is inputted into the electronic expansion valve, the electronic expansion valve may overcome the temporary insubstantial malfunction and continue to operate. The specific steps include step S151 to step S154.

In step S151, the controller for the electronic expansion valve receives system information. The information may be information collected by various kinds of sensors, such as the refrigerant flow rate information, and information inputted by the control panel of the air conditioner, and may be state information fed back by the EXV, such as the initialization state information, the current opening degree information, and the information regarding whether motor stalling occurs.

In step S152, the controller for the electronic expansion valve determines, according to received information, whether the stepping motor of the electronic expansion valve stalls, step S153 is to be performed in the case that the stepping motor of the electronic expansion valve stalls, and step S154 is to be performed in the case that the stepping motor of the electronic expansion valve does not stall. The motor stalling information may be determined by a sensor detecting the flow rate of the refrigerant. The controller for the electronic expansion valve, on the one hand, obtains a current actual value of the flow rate of the refrigerant via the sensor, and on the other hand, stores the current opening degree information of the electronic expansion valve in the memorizer of its own, and the current opening degree information has a corresponding relation with the flow rate of the refrigerant, therefore a current theoretical value of the flow rate of the refrigerant may be obtained. In the case that the electronic expansion valve operates normally, a difference between the actual value and the theoretical value of the flow rate of the refrigerant is small; and in the case that the motor stalling occurs to the electronic expansion valve, a difference between the actual value and the theoretical value of the flow rate of the refrigerant is generated, and when the difference is greater than a threshold value, it can be determined that the motor stalling occurs.

Whether the stepping motor stalls may also be detected by the drive and control module of the electronic expansion valve. In the case that the stepping motor stalls, the rotor stops rotating or the rotation speed of the rotor is decreased, in this case, the value of a back electromotive force (Bemf) generated on the coil of the stepping motor due to the rotation of the rotor is decreased, and when the value of the back electromotive force is less than a threshold value, the drive and control module determines that the motor stalling occurs and feeds back the motor stalling information to the central control module of the air-conditioning controller, or firstly feeds back the motor stalling information to the central processing module and then feeds back the motor stalling information to the central control module of the air-conditioning controller via the LIN bus.

In step S153, in the case that the controller for the electronic expansion valve receives the motor stalling information, the controller for the electronic expansion valve controls the drive and control module to control the drive module to input a maximum current, namely a seventh current, such as 400mA, into the stepping motor of the electronic expansion valve, and the step S152 is repeated, and then a malfunction signal is outputted in the case that the motor stalling occurs, and the step S154 is to be performed in the case that the motor stalling doesn't occur anymore.

In step S154, the controller for the electronic expansion valve inputs an eighth current for the normal operation, such as 250mA, into the stepping motor. The eighth current is less than the seventh current.

Unlike the conventional technology that an electronic expansion valve always operates with the maximum current, in the above embodiments of the present application, currents of the motor in each embodiment have two different values, and the proper current value is selected according to different operating conditions of the electronic expansion valve to save the power consumption.

In the above embodiments, each embodiment only considers the influence of one operating condition, for example, only considering whether the electronic expansion valve is in the initialization operation or the flow rate control operation, only considering whether the position of the valve needle of the electronic expansion valve is below the transition position or above the transition position, only considering whether the pressure of the refrigerant at the inlet of the electronic expansion valve or the pressure difference between the pressure of refrigerant at the inlet and the pressure of refrigerant at the outlet is less than the threshold value, or only considering whether the motor stalling occurs. In other embodiments, the above different operating conditions can be combined in any manner to form determining condition.

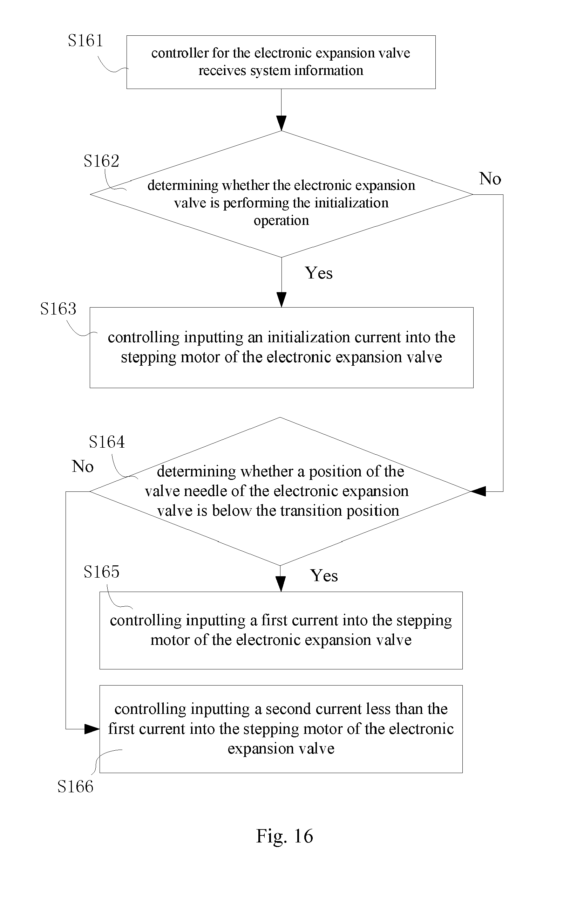

Reference is made to Figure 16, which shows a fifth embodiment of a control method for the electronic expansion valve according to the present application. In this embodiment, the two different operating conditions that whether the electronic expansion valve is in the initialization operation or the flow rate control operation, and whether the position of the valve needle of the electronic expansion valve is below the transition position or above the transition position are both considered, and the specific steps include step S161 to step S166.

In step S161, the controller for the electronic expansion valve receives system information. The information may be information collected by various kinds of sensors, such as the refrigerant flow rate information, and information inputted by the control panel of the air conditioner, and may be state information fed back by the EXV, such as the initialization state information and the current opening degree information.

In step S162, the controller for the electronic expansion valve determines, according to received information, whether the electronic expansion valve is performing the initialization operation, and if the electronic expansion valve is performing the initialization operation, step S163 is to be performed; and if the electronic expansion valve is not executing the initialization operation, step S 164 is to be performed.

In step S163, the controller for the electronic expansion valve controls the drive and control module to control the drive module to input an initialization current, such as 350mA, into the stepping motor of the electronic expansion valve.

In step S164, the controller for the electronic expansion valve continues to determine whether the position of the valve needle of the electronic expansion valve at this time is below the transition position, and if the position of the valve needle of the electronic expansion valve at this time is below the transition position, step S165 is to be performed; and if the position of the valve needle of the electronic expansion valve herein at this time is not below the transition position, step S 166 is to be performed.

In step 165, the controller for the electronic expansion valve controls the drive and control module to control the drive module to input a first current, corresponding to a state that the position of the valve needle is below the transition position, into the stepping motor of the electronic expansion valve. The first current is less than the initialization current, for example may be 250mA.

In step S166, the controller for the electronic expansion valve controls the drive and control module to control the drive module to input a second current, such as 150mA, less than the first current into the stepping motor of the electronic expansion valve.

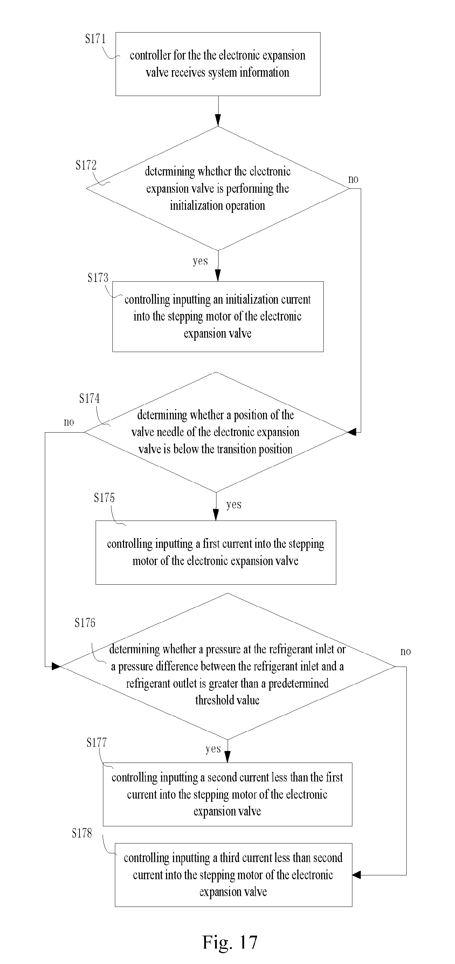

Reference is made to Figure 17, which shows a flow chart of a sixth embodiment of a control method for the electronic expansion valve according to the present application. In this embodiment, three different operating conditions that whether the electronic expansion valve is in the initialization operation or the flow rate control operation, whether the position of the valve needle of the electronic expansion valve is below the transition position, and whether the pressure of the refrigerant at the inlet of the electronic expansion valve is greater than the predetermined threshold value are all considered, and the specific steps include step S171 to step S178.

In step S171, the controller for the electronic expansion valve receives system information. The information may be information collected by various kinds of sensors, such as the refrigerant flow rate information, and information inputted by the control panel of the air conditioner, and may be state information fed back by the EXV, such as the initialization state information and the current opening degree information.

In step S172, the controller for the electronic expansion valve determines, according to received information, whether the electronic expansion valve is performing the initialization operation, and if the electronic expansion valve is performing the initialization operation, step S 173 is to be performed; and if the electronic expansion valve is not executing the initialization operation, step S 174 is to be performed.

In step S173, the controller for the electronic expansion valve controls the drive and control module to control the drive module to input an initialization current, such as 350mA, into the stepping motor of the electronic expansion valve.

In step S 174, the controller for the electronic expansion valve continues to determine whether the position of the valve needle of the electronic expansion valve at this time is below the transition position, and if the position of the valve needle of the electronic expansion valve at this time is below the transition position, step S 175 is to be performed; and if the position of the valve needle of the electronic expansion valve herein at this time is not below the transition position, step S 176 is to be performed.

In step S175, the controller for the electronic expansion valve controls the drive and control module to control the drive module to input a first current, corresponding to a state that the position of the valve needle is below the transition position, into the stepping motor of the electronic expansion valve. The first current is less than the initialization current, and may be 250mA.

In step S176, the controller for the electronic expansion valve determines, according to received information, whether the pressure of refrigerant at the inlet of the electronic expansion valve or a pressure difference between the pressure of refrigerant at the inlet of the electronic expansion valve and the pressure of refrigerant at the outlet of the electronic expansion valve is greater than or equal to a predetermined threshold value, and step S177 is to be performed in the case that the pressure of refrigerant at the inlet of the electronic expansion valve or the pressure difference between the pressure of refrigerant at the inlet of the electronic expansion valve and the pressure of refrigerant at the outlet of the electronic expansion valve is greater than or equal to the predetermined threshold value, and step S178 is to be performed in the case that the pressure of refrigerant at the inlet of the electronic expansion valve or the pressure difference between the pressure of refrigerant at the inlet of the electronic expansion valve and the pressure of refrigerant at the outlet of the electronic expansion valve is less than the predetermined threshold value.

In step S177, the controller for the electronic expansion valve controls the drive and control module to control the drive module to input a second current, corresponding to a state that the pressure of refrigerant at the inlet of the electronic expansion valve or the pressure difference between the pressure of refrigerant at the inlet of the electronic expansion valve and the pressure of refrigerant at the outlet of the electronic expansion valve is greater than or equal to the predetermined threshold value, into the stepping motor of the electronic expansion valve. The second current is less than the first current, and may be 200mA.

In step S178, the controller for the electronic expansion valve controls the drive and control module to control the drive module to input a third current, corresponding to a state that the pressure of refrigerant at the inlet of the electronic expansion valve or the pressure difference between the pressure of refrigerant at the inlet of the electronic expansion valve and the pressure of refrigerant at the outlet of the electronic expansion valve is less than the predetermined threshold value, into the stepping motor of the electronic expansion valve. The third current is less than the second current, and may be 150mA.

The operating condition, depending on whether the stepping motor of the electronic expansion valve stalls, may occur in every process of the operation of the electronic expansion valve, for example the motor stalling may occur when the electronic expansion valve is performing different operation manners, may occur when the valve needle is at different positions, and may also occur when the pressure of the refrigerant is different, therefore the operating condition, depending on whether the stepping motor of the electronic expansion valve stalls, may be combined with the above other different operating conditions to perform control, and the specific control processes will not be listed herein.

Corresponding to the above control method, the controller for the electronic expansion valve according to the present application may be summarized to include an information receiving unit configured to receive system information, a determining unit configured to determine an operating condition of the electronic expansion valve according to received system information, and a control unit configured to output a control signal according to the operating condition determined by the determining unit to input different currents into the motor of the electronic expansion valve. Since these units consists of many electronic circuits, the electronic circuits may be respectively integrated as different separate chips, or collectively integrated as one chip, or one part of the electronic circuits may be integrated as one chip and the other part thereof is integrated as another chip. For example, in the specific embodiment of the structure of the controller for the electronic expansion valve according to the present application in Figure 2, the information receiving unit and the operating condition determining unit are integrated in the central control module of the air conditioner, and the control unit is embodied as the structure including the LIN transceiver module, the central processing module, the drive and control module and the drive module, and the central control module of the air conditioner transmits data with the control unit for the electronic expansion valve via the LIN bus. In the specific embodiment of the structure of the controller for the electronic expansion valve according to the present application in Figure 10, the information receiving unit and the operating condition determining unit are integrated in the central control module for the air conditioner, and the control unit is embodied as a structure including the drive and control module and the drive module, and the central control module of the air conditioner transmits data with the control unit via SPI bus. Of course, in other embodiments, these units may also be integrated as different integrated chips, which will not be listed hereinafter.

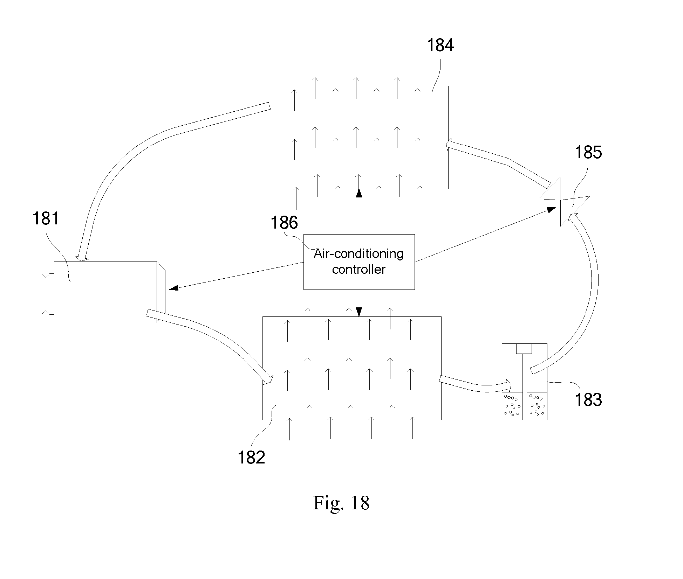

The structure and the control method of the electronic expansion valve according to the present application are described hereinbefore, and in one embodiment of the present application, the electronic expansion valve is applied in the automotive air conditioning system. Reference is made to Figure 18, which is a block diagram showing the structure of an automotive air conditioning system according to the present application. The automotive air conditioning system of the present application mainly includes a compressor 181, a condenser 182, a drying device 183, an evaporator 184, and an electronic expansion valve 185 connected between the condenser 182 and the evaporator 183, and the operations of all the components are controlled by an air-conditioning controller 186. Similar to the structure shown in Figures 1, 2 and 10, the electronic expansion valve 185 includes a valve body and a controller for the expansion valve. The valve body of the electronic expansion valve includes a refrigerant inlet and a refrigerant outlet, and a passage allowing the refrigerant to flow is formed inside the valve body, and an orifice is formed in the passage. A valve needle is provided inside the valve body, and a stepping motor is arranged above the valve body. The stepping motor includes a stator coil and a rotor, the stator coil may be inputted with current under the control of the controller for the expansion valve and may drive the rotor to rotate when being inputted with the current, the valve needle is elastically connected to the rotor of the stepping motor, and the valve needle may move upward and downward with the rotation of the rotor of the stepping motor. When the valve needle moves downward to come into contact with the orifice in the refrigerant flow passage, the valve needle blocks the orifice in the refrigerant flow passage, thus the refrigerant cannot circulate through the electronic expansion valve. When the valve needle moves upward to be disengaged from the orifice in the refrigerant flow passage, the refrigerant flow passage is opened, thus the refrigerant can enter via the refrigerant inlet, pass through refrigerant flow passage, and flow out via the refrigerant outlet. The opening degree of the refrigerant flow passage of the electronic expansion valve can be controlled by controlling a distance of the valve needle moving away from the orifice in refrigerant flow passage. The flow rate of refrigerant flowing into the evaporator can be controlled by adjusting the opening degree of the electronic expansion valve, to further control the temperature of the evaporator, thereby realizing the effect of adjusting the temperature. The electronic expansion valve in the automotive air conditioning system according to the present application may input different currents into the stepping motor of the electronic expansion valve according to the different operating conditions depending on whether the electronic expansion valve is in the initialization operation or in the flow rate control operation, whether the position of the valve needle of the electronic expansion valve is below the transition position or above the transition position, and whether the pressure of the refrigerant at the inlet of the electronic expansion valve or the pressure difference between the pressure of refrigerant at the inlet and the pressure of refrigerant at the outlet is greater than the threshold value. The specific structure and control method of the electronic expansion valve will not be repeated herein.

The above embodiments are applied in the automotive air conditioning system, and of course, the control method for the electronic expansion valve according to the present application may also be applied in other air-conditioning systems, such as household air conditioning systems, or commercial air conditioning systems, or other systems requiring the electronic expansion valve.

The electronic expansion valve in the air conditioning system according to the present application may input different currents into the stepping motor of the electronic expansion valve according to different operating conditions of the electronic expansion valve, and can effectively reduce the energy consumption of the electronic expansion valve. In the case that the stepping motor of the electronic expansion valve stalls, a large current may be inputted into the stepping motor to overcome the insubstantial malfunction. Compared to the solution that the electronic expansion valve always employs the maximum operating current, the electronic expansion valve in the present application employs different currents according to different operating conditions, thus the service life of the electronic expansion valve can be increased.

The embodiments described hereinabove are only preferred embodiments of the present application. It should be noted that, a few improvements and modifications can be made by the person skilled in the art without departing from the principle of the present application, and the scope of the present application is defined by the claims.

## Claims

1. A controller for an electronic expansion valve, comprising an information receiving unit, an operating condition determining unit and a control unit; wherein,
the information receiving unit is configured to receive sensor information, control command information, or feedback information;
the operating condition determining unit is configured to determine an operation condition of the electronic expansion valve according to the information received by the information receiving unit, and output a control signal corresponding to the operating condition according to the operating condition of the electronic expansion valve; and
the control unit is configured to output a current control signal to control inputting a current corresponding to the operating condition into a stepping motor of the electronic expansion valve according to the control signal outputted by the operating condition determining unit.

2. The controller for the electronic expansion valve according to claim 1, wherein the operating condition determining unit is configured to output a control signal to the control unit in the case that the operating condition determining unit determines that the electronic expansion valve is performing an initialization operation, the control unit is configured to output a current control signal according to the control signal, the current control signal is configured to input an initialization current into the stepping motor, and the initialization operation is an operation of commanding the electronic expansion valve to go through an entire opening degree range and return to an initial opening degree in the case that the electronic expansion valve starts to operate, the electronic expansion valve is closed, a system abnormity occurs, or the electronic expansion valve is required to perform the initialization operation; and
the operating condition determining unit is configured to output a control signal to the control unit in the case that the operating condition determining unit determines that the electronic expansion valve is performing a flow rate control operation, the control unit is configured to output a current control signal according to the control signal, the current control signal is configured to input a second working current into the stepping motor, and the value of the initialization current is greater than the value of the second working current.

3. The controller for the electronic expansion valve according to claim 1, wherein the operating condition determining unit is configured to output a control signal to the control unit in the case that the operating condition determining unit determines that a position of a valve needle of the electronic expansion valve is below a preset transition position, and the control unit is configured to output a current control signal according to the control signal, and the current control signal is configured to input a third working current into the stepping motor; and
the operating condition determining unit is configured to output a control signal to the control unit in the case that the operating condition determining unit determines that the position of the valve needle of the electronic expansion valve is above or is just the preset transition position, the control unit is configured to output a current control signal according to the control signal, and the current control signal is configured to input a fourth working current, less than the third working current, into the stepping motor, and the preset transition position is a position that the valve needle of the electronic expansion valve is just disengaged from a refrigerant flow passage and the refrigerant flow passage is opened.

4. The controller for the electronic expansion valve according to claim 1, wherein the operating condition determining unit is configured to output a control signal to the control unit in the case that the operating condition determining unit determines that a pressure of refrigerant at a refrigerant inlet or a pressure difference between the pressure of refrigerant at the refrigerant inlet and a pressure of refrigerant at a refrigerant outlet of the electronic expansion valve is greater than or equal to a predetermined threshold value, the control unit is configured to output a current control signal according to the control signal, and the current control signal is configured to input a fifth working current into the stepping motor; and
the operating condition determining unit is configured to output a control signal to the control unit in the case that the operating condition determining unit determines that the pressure of refrigerant at the refrigerant inlet or the pressure difference between the pressure of refrigerant at the refrigerant inlet and the pressure of refrigerant at the refrigerant outlet of the electronic expansion valve is less than the predetermined threshold value, the control unit is configured to output a current control signal according to the control signal, and the current control signal is configured to input a sixth working current, less than the fifth working current, into the stepping motor.

5. The controller for the electronic expansion valve according to claim 1, wherein the operating condition determining unit is configured to output a control signal to the control unit in the case that the operating condition determining unit determines that the stepping motor of the electronic expansion valve stalls, the control unit is configured to output a current control signal according to the control signal, and the current control signal is configured to input a seventh working current into the stepping motor; and
the operating condition determining unit is configured to output a control signal to the control unit in the case that the operating condition determining unit determines that the stepping motor of the electronic expansion valve does not stall, the control unit is configured to output a current control signal according to the control signal, and the current control signal is configured to input an eighth working current, less than the seventh working current, into the stepping motor.

6. The controller for the electronic expansion valve according to claim 5, wherein a signal indicating whether the stepping motor stalls is determined by detecting a flow rate of the refrigerant of the electronic expansion valve, the controller for the electronic expansion valve is configured to obtain a current actual value of the flow rate of the refrigerant via a sensor, and a current opening degree information of the electronic expansion valve is stored in a memorizer of the controller for the electronic expansion valve, and the controller for the electronic expansion valve is configured to obtain a current theoretical value of the flow rate of the refrigerant according to a correspondence relationship between the opening degree information and the flow rate of the refrigerant, and in the case that a difference between the actual value and the theoretical value of the flow rate of the refrigerant is small, it is determined that the electronic expansion valve operates normally; and in the case that the difference between the actual value and the theoretical value of the flow rate of the refrigerant is greater than a threshold value, it is determined that the stepping motor of the electronic expansion valve stalls.

7. The controller for the electronic expansion valve according to claim 5, wherein a signal indicating whether the stepping motor stalls is determined by detecting a back electromotive force generated on a coil of the stepping motor of the electronic expansion valve, and it is determined that the stepping motor stalls in the case that a value of the back electromotive force is smaller than a threshold value.

8. An electronic expansion valve, comprising a valve body and a controller for the electronic expansion valve, wherein the valve body comprises a passage allowing refrigerant to flow, a valve needle configured to cooperate with the passage, and a stepping motor configured to control the motion of the valve needle to adjust an opening degree of the passage of the refrigerant; the controller for the electronic expansion valve is configured to output, according to an operating condition of the electronic expansion valve, a control signal corresponding to the operation condition to control inputting a current into the stepping motor, to drive the stepping motor to rotate, and the stepping motor is configured to rotate to drive the valve needle to move, to adjust the opening degree of the passage of the refrigerant.

9. The electronic expansion valve according to claim 8, wherein the controller for the electronic expansion valve comprises a local interconnect network (LIN) transceiver module, a central processing module, a drive and control module and a drive module;
the LIN transceiver module is configured to receive a control command, outputted by an air-conditioning controller according to an operating condition of the stepping motor via a LIN bus, and convert the control command into a control command signal which is receivable by the central processing module;
the central processing module is configured to parse the control command signal sent by the LIN transceiver module and output a current control signal;
the drive and control module is configured to receive the current control module sent by the central processing module, perform a comparison operation and output a drive control signal; and
the drive module is configured to input a current into the stepping motor according to the drive control signal outputted by the drive and control module.

10. The electronic expansion valve according to claim 8, wherein the controller for the electronic expansion valve comprises a central control module, a drive and control module, and a drive module which are all integrated in an air-conditioning controller;
the central control module is configured to output a current control signal according to an operating condition of the stepping motor;
the drive and control module is configured to receive the current control signal sent by the central control module, perform a comparison operation and output a drive control signal; and
the drive module is configured to input a current into the stepping motor according to the drive control signal outputted by the drive and control module.

11. The electronic expansion valve according to claim 8, wherein in the case that the electronic expansion valve is performing an initialization operation, the controller for the electronic expansion valve is configured to input an initialization working current into the stepping motor, the initialization operation is an operation of commanding the electronic expansion valve to go through an entire opening degree range and return to an initial opening degree in the case that the electronic expansion valve starts to operate, the electronic expansion valve is closed, a system abnormity occurs, or the electronic expansion valve is required to perform the initialization operation; and in the case that the electronic expansion valve is performing a flow rate control operation, the controller for the electronic expansion valve is configured to control the drive and control module to control the drive module to input a second working current into the stepping motor, and a value of the initialization working current is greater than a value of the second working current.

12. The electronic expansion valve according to claim 11, wherein an initialization operation command is configured to realize control by providing a separate initialization signal bit in a signal sent by the air-conditioning controller to the controller for the electronic expansion valve, or by continuously sending a minimum opening degree signal or a maximum opening degree signal, the maximum opening degree or the minimum opening degree, and an initial opening degree to the controller for the electronic expansion valve by the air-conditioning controller, or by continuously sending a command corresponding to the minimum opening degree or the maximum opening degree, or a command corresponding to the maximum opening degree or the minimum opening degree, and the initial opening degree, to the drive and control module by the air-conditioning controller.

13. The electronic expansion valve according to claim 8, wherein in the case that a position of the valve needle of the electronic expansion valve is below a preset transition position, the controller for the electronic expansion valve is configured to input a third working current into the stepping motor; and in the case that the position of the valve needle of the electronic expansion valve is above or is just the preset transition position, the controller for the electronic expansion valve is configured to input a fourth working current, less than the third working current, into the stepping motor, wherein the preset transition position is a position where the valve needle is located in the case that the valve needle is disengaged from the passage of the refrigerant after the stepping motor of the electronic expansion valve rotates by a certain degree and the passage of the refrigerant is opened.

14. The electronic expansion valve according to claim 8, wherein in the case that a pressure of refrigerant at a refrigerant inlet or a pressure difference between the pressure of refrigerant at the refrigerant inlet and a pressure of refrigerant at a refrigerant outlet of the electronic expansion valve is greater than or equal to a predetermined threshold value, the controller for the electronic expansion valve is configured to input a fifth working current into the stepping motor; and in the case that the pressure of refrigerant at the refrigerant inlet or the pressure difference between the pressure of refrigerant at the refrigerant inlet and the pressure of refrigerant at the refrigerant outlet of the electronic expansion valve is less than the predetermined threshold value, the controller for the electronic expansion valve is configured to input a sixth working current, less than the fifth working current, into the stepping motor.

15. The electronic expansion valve according to claim 8, wherein in the case that the stepping motor of the electronic expansion valve stalls, the controller for the electronic expansion valve is configured to input a seventh working current into the stepping motor; and in the case that the stepping motor of the electronic expansion valve does not stall, the controller for the electronic expansion valve is configured to input an eighth working current, less than the seventh working current, into the stepping motor.

16. The electronic expansion valve according to claim 15, wherein a signal indicating whether the stepping motor stalls is determined by detecting a flow rate of the refrigerant of the electronic expansion valve, the controller for the electronic expansion valve is configured to obtain a current actual value of the flow rate of the refrigerant via a sensor, and a current opening degree information of the electronic expansion valve is stored in a memorizer of the controller for the electronic expansion valve, and the controller for the electronic expansion valve is configured to obtain a current theoretical value of the flow rate of the refrigerant according to a correspondence relationship between the opening degree information and the flow rate of the refrigerant, and in the case that a difference between the actual value and the theoretical value of the flow rate of the refrigerant is small, it is determined that the electronic expansion valve operates normally; and in the case that the difference between the actual value and the theoretical value of the flow rate of the refrigerant is greater than a threshold value, it is determined that the stepping motor of the electronic expansion valve stalls.

17. The electronic expansion valve according to claim 15, wherein a signal indicating whether the stepping motor stalls is determined by detecting a back electromotive force generated on a coil of the stepping motor of the electronic expansion valve, and it is determined that the stepping motor stalls in the case that a value of the back electromotive force is smaller than a threshold value.

18. An air conditioning system, comprising a compressor, a condenser, an evaporator and an electronic expansion valve, wherein refrigerant is configured to pass through the electronic expansion valve to form a circulation in the condenser, the evaporator and the compressor, and the electronic expansion valve is the electronic expansion valve according to claim 8 to claim 17.

19. A control method for an electronic expansion valve, the electronic expansion valve comprising a valve body and a controller for the electronic expansion valve, the valve body comprising a passage allowing refrigerant to flow, a valve needle configured to cooperate with the passage, and a stepping motor configured to control the motion of the valve needle to adjust an opening degree of the passage of the refrigerant, and the stepping motor being controlled by the controller for the electronic expansion valve, wherein the control method comprises:
determining, by the controller for the electronic expansion valve, an operating condition of the electronic expansion valve according to received information, and inputting, by the controller for the electronic expansion valve, a current corresponding to the operating condition into the stepping motor of the electronic expansion valve according to the operating condition of the electronic expansion valve.

20. The control method for the electronic expansion valve according to claim 19, comprising:
inputting, by the controller for the electronic expansion valve, an initialization working current into the stepping motor in the case that the controller for the electronic expansion valve determines that the electronic expansion valve is performing an initialization operation, wherein the initialization operation is an operation of commanding the electronic expansion valve to go through an entire opening degree range and return to an initial opening degree in the case that the electronic expansion valve starts to operate, the electronic expansion valve is closed, a system abnormity occurs, or the electronic expansion valve is required to perform the initialization operation; and
inputting, by the controller for the electronic expansion valve, a second working current into the stepping motor of the electronic expansion valve in the case that the controller for the electronic expansion valve determines that the electronic expansion valve is performing a flow rate control operation, wherein a value of the initialization working current is greater than a value of the second working current.

21. The control method for the electronic expansion valve according to claim 20, wherein an initialization operation command is configured to realize control by providing a separate initialization signal bit in a signal sent by an air-conditioning controller to the controller for the electronic expansion valve, or by continuously sending a minimum opening degree signal or a maximum opening degree signal, the maximum opening degree or the minimum opening degree, and an initial opening degree to the controller for the electronic expansion valve by the air-conditioning controller, or by continuously sending a command corresponding to the minimum opening degree or the maximum opening degree, or a command corresponding to the maximum opening degree or the minimum opening degree, and the initial opening degree, to a drive and control module by the air-conditioning controller.

22. The control method for the electronic expansion valve according to claim 19, comprising:
inputting, by the controller for the electronic expansion valve, a third working current into the stepping motor in the case that the controller for the electronic expansion valve determines that a position of the valve needle of the electronic expansion valve is below a preset transition position; and
inputting, by the controller for the electronic expansion valve, a fourth working current into the stepping motor in the case that the position of the valve needle of the electronic expansion valve is above or is just the preset transition position, wherein the fourth working current is less than the third working current, and the preset transition position is a position where the valve needle is located in the case that the valve needle is disengaged from the passage of the refrigerant after the stepping motor of the electronic expansion valve rotates by a certain degree and the passage of the refrigerant is opened.

23. The control method for the electronic expansion valve according to claim 19, comprising:
inputting, by the controller for the electronic expansion valve, a fifth working current into the stepping motor in the case that the controller for the electronic expansion valve determines that a pressure of refrigerant at a refrigerant inlet or a pressure difference between the pressure of refrigerant at the refrigerant inlet and a pressure of refrigerant at a refrigerant outlet of the electronic expansion valve is greater than or equal to a predetermined threshold value; and
inputting, by the controller for the electronic expansion valve, a sixth working current into the stepping motor in the case that the pressure of refrigerant at the refrigerant inlet or the pressure difference between the pressure of refrigerant at the refrigerant inlet and the pressure of refrigerant at the refrigerant outlet of the electronic expansion valve is less than the predetermined threshold value, wherein the sixth working current is less than the fifth working current.

24. The electronic expansion valve according to claim 19, comprising:
inputting, by the controller for the electronic expansion valve, a seventh working current into the stepping motor in the case that the controller for the electronic expansion valve determines that the stepping motor of the electronic expansion valve stalls; and
inputting, by the controller for the electronic expansion valve, an eighth working current into the stepping motor in the case that the controller for the electronic expansion valve determines that the stepping motor of the electronic expansion valve does not stall, wherein the eighth working current is less than the seventh working current.

25. The electronic expansion valve according to claim 24, wherein a signal indicating whether the stepping motor stalls is determined by detecting a flow rate of the refrigerant of the electronic expansion valve, the controller for the electronic expansion valve is configured to obtain a current actual value of the flow rate of the refrigerant via a sensor, and a current opening degree information of the electronic expansion valve is stored in a memorizer of the controller for the electronic expansion valve, and the controller for the electronic expansion valve is configured to obtain a current theoretical value of the flow rate of the refrigerant according to a correspondence relationship between the opening degree information and the flow rate of the refrigerant, and in the case that a difference between the actual value and the theoretical value of the flow rate of the refrigerant is small, it is determined that the electronic expansion valve operates normally; and in the case that the difference between the actual value and the theoretical value of the flow rate of the refrigerant is greater than a threshold value, it is determined that the stepping motor of the electronic expansion valve stalls.

26. The electronic expansion valve according to claim 24, wherein a signal indicating whether the stepping motor stalls is determined by detecting a back electromotive force generated on a coil of the stepping motor of the electronic expansion valve, and it is determined that the stepping motor stalls in the case that a value of the back electromotive force is smaller than a threshold value.

27. A control method for an air conditioning system, the air conditioning system comprising a compressor, a condenser, an evaporator and an electronic expansion valve, wherein refrigerant is configured to pass through the electronic expansion valve to form a circulation in the condenser, the evaporator and the compressor, and a control method for the electronic expansion valve is the control method for the electronic expansion valve according to claim 19 to claim 26.
